# EUROPEAN PATENT APPLICATION

(11) **EP 4 496 358 A1**
(43) Date of publication of application: **22.01.2025**
(21) Application number: 23186183.2
(22) Date of filing: 18.07.2023
(51) Int. Cl.: H04W 4/16, H04W 4/44, H04W 12/06, H04W 4/80

(54) **METHOD AND DEVICE FOR PROVIDING MOBILE COMMUNICATION IN A VEHICLE**

(71) Applicant: CARIAD SE, 38440 Wolfsburg (DE)
(72) Inventor: Kumar, Digamber, 44803 Bochum (DE)
(74) Representative: Hofstetter, Schurack & Partner

(57) **Abstract**

The invention relates to a method and a device for providing mobile communication in a vehicle (1), the method comprising determining that a mobile communication device (10) is not in the proximity of the vehicle (1), connecting a communication unit of the vehicle (1) to the mobile communication device (10) in response to determining that the mobile communication device (10) is not in the proximity of the vehicle (1) and providing features of the mobile communication device (10) through the communication unit in the vehicle (1).

## Description

The present invention relates to a method and a device for providing mobile communication in a vehicle as well as a vehicle with such a device.

While vehicle may provide certain connectivity features, such as internet, if a mobile phone is left behind, a user of the vehicle is usually stranded as he cannot access his phone and in particular the information stored thereon.

It is thus an object of the present invention to provide an improved method and device for providing mobile communication in a vehicle

According to a first aspect, a method for providing mobile communication in a vehicle is provided.

Therein, the method comprises the steps of determining that a mobile communication device is not in the proximity of the vehicle, connecting a communication unit of the vehicle to the mobile communication device in response to determining that the mobile communication device is not in the proximity of the vehicle and providing features of the mobile communication device through the communication unit in the vehicle.

The method is in particular used to access and use a mobile communication device although it is not in the proximity of the vehicle.

In a first step of the method, it is determined that a mobile communication device is not in the proximity of the vehicle.

A mobile communication device is a device that provides mobile communication services to a user, such as, phone calls, text messages, internet access, etc. In particular, the mobile communication device is a mobile phone, in particular a smart phone, a phablet, a tablet or a wearable device.

Therein, the mobile communication device is an independent entity and/or a personal device of a user, different and distinct from the vehicle and in particular any unit or device provided therein.

In particular, while there may be also provided communication services in the vehicle, such as, for example, through a communication unit and/or an infotainment system of the vehicle, which will be further explained below, the particular mobile communication device is different therefrom.

To not be in the proximity of the vehicle comprises not being located or arranged in or at the vehicle, in particular not being in a range or radius of 5 m, 10 m, 50 m or 100 m of the vehicle. A threshold value for being not in proximity can be in a range from 2m to 250m, for example. "Not in the proximity" may be defined as the communication device having a distance to the vehicle that is larger than the threshold value.

This may be detected through proximity sensors and/or by not being able to establish a connection, in particular a connection through a wireless communication channel, for example Bluetooth, UWB (ultra wide band), NFC (near field communication) WiFi or any other near field communication technologies or short-range communication channels. In particular, the mobile communication device has been previously registered for a connection with the vehicle, as will be explained in further detail below.

Alternatively, or additionally, it may be determined that the mobile communication device is not in the proximity of the vehicle by receiving a user input and/or prompt, in particular at a communication unit and/or an infotainment system, in particular comprising such a communication unit.

In response to determining that the mobile communication device is not in the proximity of the vehicle, the communication unit is connected to the mobile communication device.

Therein, a connection from the communication unit of the vehicle with the mobile communication device is established, in particular through a wireless communication channel, such as mobile communication, in particular 3G, 4G, 5G, WiFi and/or Car2X, in particular Car2 Infrastructure. In particular, the communication channel is a channel that is adapted for long-range communication. In particular, a communications protocol such as TCP/IP may be used.

In a further step, features of the mobile communication device are provided through the communication unit in the vehicle.

In particular, the mobile communication device being remote or distant from the vehicle may grant access to the communication unit to its features, in particular the apps, information, contents and/or data being run and/or stored on the mobile communication device and provide these features to the communication unit.

Therein, the contents and/or functions of the mobile communication device may be mirrored to the communication unit and/or the infotainment system to be displayed on a display unit.

This may be performed by a particular app or software that establishes the connection and provides the features between the communication unit of the vehicle and the mobile communication device, wherein the app may be installed on both, the communication unit of the vehicle and the mobile communication device.

The mobile communication device may also connect to the communication unit via a wireless communication channel, such as mobile communication, in particular 3G, 4G, 5G and/or WiFi.

Therein, the mobile communication device and the communication unit may connect directly, i.e. peer to peer, or through a proxy, such as a server in a remote location, in particular a could server that is dedicated for this function.

Optionally, the user is able to restrict access to certain information or apps being run or stored on the mobile communication device, such that only a portion, a fraction and/or parts thereof are in fact provided to the communication unit and thus the vehicle. This may be stored as a default for the particular user, and/or the user is requested to define the scope of access upon every new connection.

The method is particularly useful for a case where a user has left his mobile communication device at home after leaving the house, wherein at the time he or she notices it, it is already too late as the user is too far away from home and/or too late for a scheduled meeting and thus returning is not an option.

Thereby, through the method according to the invention, the user may access his phone through his car and to use it, although it is not in the proximity of the car, as usually required by connectivity services.

According to an embodiment, the method further comprises authenticating the communication unit at the mobile communication device.

The step of authenticating the communication unit is used to establish a trusted connection between the unit and the vehicle and the mobile communication device.

This may be performed by entering a passkey such as a password, a key, a PIN or the like at both, the communication unit and the mobile communication device vice-versa or by entering a passkey at the communication unit that is preset at and/or by the mobile communication device. The passkey may be entered, for example, at a touch screen and/or a hard or soft keyboard.

The communication unit may be required to authenticate only once, every time upon a new communication attempt or after a predefined timeout, such as 1 month.

Through this embodiment, it is achieved that no unallowed access to the mobile communication device is possible. This embodiment is particularly secure.

According to an embodiment authenticating is performed before providing features of the mobile communication device.

In particular, according to this embodiment, the communication unit is authenticated before providing features the first time to the communication unit and/or as an initial step before and/or together with establishing a connection between the communication unit and the mobile communication device.

For example, the step of authenticating may be only performed once, wherein thereafter, as soon as the communication unit is authenticated, no further authentication measures are necessary. In particular, after being authenticated once, no further interaction, in particular at the mobile communication device, might be necessary to access it from the communication unit.

Through this embodiment, it is possible that once the communication unit and the vehicle is known to the mobile communication device, no further actions are required. This embodiment is particularly comfortable while remaining reasonably secure.

According to an embodiment authenticating is performed while the mobile communication device is in the proximity of the vehicle.

In particular, authentication may be performed simultaneously at the mobile communication device and the communication unit, to, for example, enter the same passkey at both devices, in particular within a predefined timeout, such as 60 seconds.

Through this embodiment, it is achieved that the communication unit is only authenticated while it is in the hands of the user of both the car and the mobile communication device. This is particularly secure.

According to an embodiment authenticating is performed through a different communication channel than providing features of the mobile communication device.

In particular, authentication may be performed through a short-range communication channel, such as Bluetooth of NFC, whereas the access to the mobile communication device to provide the features thereof to the communication unit may be performed through a long-range communication channel, such as 3G or WiFi.

This is in particular suitable if the authenticating is performed while the mobile communication device is in the proximity of the vehicle.

In particular, the communication channel through which the authentication is performed may be the same that is used for a connectivity service of the mobile communication device while it is in the vehicle. However, the step of authentication may be different from the standard registering or pairing and require more and/or different passkeys and/or apps.

Alternatively, or additionally, authentication may be performed through a server in a remote location, in particular a cloud server, while the provision of features may be performed directly, i.e. peer to peer, without a server in the middle.

This is in particular suitable if the authenticating is performed while the mobile communication device is not in the proximity of the vehicle.

By using a different communication channel, a very secure embodiment is provided.

According to an embodiment providing features of the mobile communication device comprises providing a phone call feature.

In particular, in this embodiment, a phone call, incoming or outgoing, is performed by the mobile communication device and the audio, receiving and sending, i.e. speaking and listening, is provided at the communication unit at the vehicle.

This feature is in particular different from a call forwarding option. In particular, the other participant of the call cannot identify that the mobile communication device is not in the proximity of the vehicle and thereby of the user but rather at home or the like. This is achieved by bidirectionally providing the audio to and from the mobile communication device through the established connection.

Through this embodiment, it is possible to perform calls on the vehicle and in particular to inform other persons that the mobile communication device has been left behind, such as a spouse or an employer.

According to an embodiment providing features of the mobile communication device comprises providing a contact information feature.

A contact information feature is an information regarding a contact that is stored or saved on the mobile communication device, in particular a virtual address book or the like.

The contact information feature in particular comprises one or more of a telephone number, a name, a street address or an e-mail address.

This contact information feature may be provided to the communication unit and displayed thereon.

Through this embodiment, it is possible to access the contact information stored in the mobile communication device. This embodiment is very comfortable. In particular, while some connectivity features, such as a phone feature, may be provided by the communication unit without a mobile communication device present, without the corresponding number to call, this feature is useless.

According to an embodiment providing features of the mobile communication device comprises receiving an input at the communication unit in the vehicle and performing the input at the mobile communication device

In particular, in this embodiment, some or all of the functions of the mobile communication device are mirrored to the communication unit, wherein the apps and data may be used as if the user would be having the mobile communication device present.

For example, text messages and/or e-mail messages may be composed and/or sent from the mobile communication device through the communication unit and/or apps, such as traffic monitoring apps, calendar apps, a browser, or the like being installed on the mobile communication device may be used on the communication unit.

Thereby, a very functional and comfortable access to the mobile communication device is achieved.

For use cases or use situations which may arise in the method, and which are not explicitly described here, it may be provided that, in accordance with the method, an error message and/or a prompt for user feedback is output and/or a default setting and/or a predetermined initial state is set.

According to another aspect a device for scheduling software processes in a vehicle is provided. The device may comprise a data processing unit adapted to perform an embodiment of the method according to the invention.

For this purpose, the data processing unit may comprise at least one microprocessor and/or at least one microcontroller and/or at least one FPGA (field programmable gate array) and/or at least one DSP (digital signal processor). In particular, a CPU (Central Processing Unit), a GPU (Graphical Processing Unit) or an NPU (Neural Processing Unit) can be used as the microprocessor in each case. Furthermore, the data processing unit may have program code which is arranged to perform the embodiment of the method according to the invention when executed by the data processing unit. The program code may be stored in a data memory unit of the data processing unit. The data processing unit may be based, for example, on at least one circuit board and/or on at least one SoC (system on chip).

According to a further aspect, a vehicle comprising such a device is disclosed.

The vehicle according to the invention is preferably configured as a motor vehicle, in particular a passenger car or truck, or a passenger bus or motorcycle.

As a further aspect, the invention also comprises a computer-readable storage medium comprising program code which, when executed by a computer or a computer network, causes the computer or computer network to execute an embodiment of the method according to the invention. The storage medium may be provided at least in part as a non-volatile data storage (e.g., as a flash memory and/or as an SSD - solid state drive) and/or at least in part as a volatile data storage (e.g., as a RAM - random access memory). The storage medium may be arranged in the computer or computer network. However, the storage medium may also be operated, for example, as a so-called app store server and/or cloud server on the Internet. A processor circuit with, for example, at least one microprocessor may be provided by the computer or computer network. The program code may be provided as binary code and/or as assembly code and/or as source code of a programming language (e.g. C) and/or as program script (e.g. Python).

The invention also encompasses combinations of the features of the described embodiments. Thus, the invention also encompasses realizations each having a combination of the features of more than one of the described embodiments, provided that the embodiments have not been described as mutually exclusive.

With respect to the embodiments of the device, the vehicle and the storage medium, and the associated advantages, reference is made to the previously described embodiments of the method and the advantages thereof.

In the following, example embodiments of the invention are described with respect to the Figure. Therein,

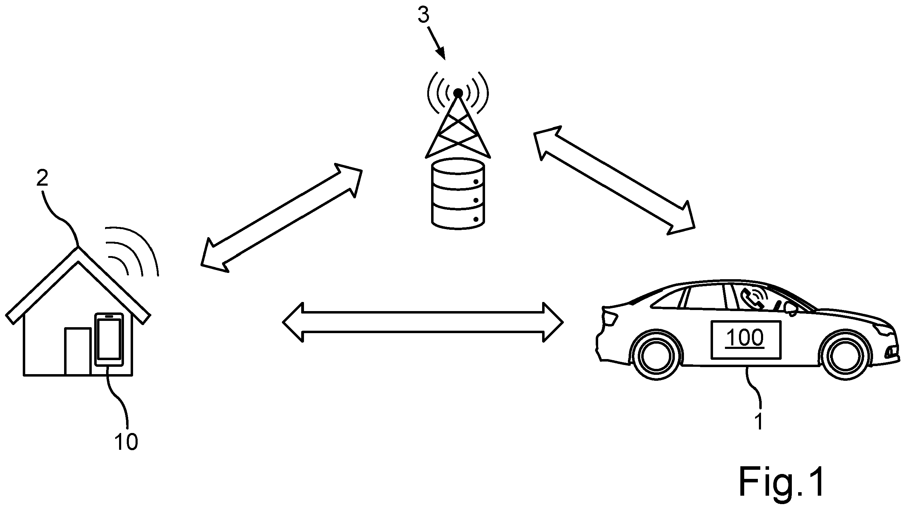

- Fig. 1: shows a schematic overview of an embodiment of a method and a device for providing mobile communication in a vehicle.

The example embodiments explained below are preferred embodiments of the invention. In the embodiments, the described components of the embodiments each represent individual features of the invention that are to be considered independently of one another, each of which also independently further the invention. Therefore, the disclosure is intended to include combinations of the features of the embodiments other than those shown. Furthermore, the described embodiments may also be supplemented by further of the already described features of the invention.

In the figures, identical reference signs denote elements with identical functions.

Fig. 1 shows a schematic overview of an embodiment of a method and a device 100 for providing mobile communication in a vehicle 1.

Therein, the vehicle 1 comprises the device 100 and the device 100 may be embodied in a communication unit or comprise such a communication unit. Therein, the device 100 is configured to carry out the method steps being described in the following.

The device 100 is configured to determine that a mobile communication device 10 is not in the proximity of the vehicle 1. In fact, the mobile communication device 10 has been left at the home 2 of a user before driving away.

The device 100 is further configured to connect a communication unit (not shown) of the vehicle 1 to the mobile communication device 10 in response to determining that the mobile communication device 10 is not in the proximity of the vehicle 1.

The device 100 is further configured to provide features of the mobile communication device 10 through the communication unit in the vehicle 1.

The device 100 is further configured to authenticate the communication unit at the mobile communication device 10. Therein, authentication may be performed before providing features of the mobile communication device 10, while the mobile communication device 10 is in the proximity of the vehicle 1, and/or through a different communication channel than providing features of the mobile communication device 10.

In particular, authentication may be performed through a remote server 3, while providing the features is performed peer to peer between the mobile communication device 10 and the communication unit.

Therein, features of the mobile communication device 10 such as a phone call feature and/or a contact information feature may be provided to the communication unit. When an input is received at the communication unit in the vehicle, the input is performed at the mobile communication device 10.

In summary, the described example embodiments provide a particularly suitable method to access a mobile phone, which is not in the proximity of the vehicle.

## Claims

1. Method for providing mobile communication in a vehicle (1), comprising:
- determining that a mobile communication device (10) is not in the proximity of the vehicle (1);
- connecting a communication unit of the vehicle (1) to the mobile communication device (10) in response to determining that the mobile communication device (10) is not in the proximity of the vehicle (1); and
- providing features of the mobile communication device (10) through the communication unit in the vehicle (1).

2. Method according to claim 1, further comprising:
- authenticating the communication unit at the mobile communication device (10).

3. Method according to claim 2, wherein authenticating is performed before providing features of the mobile communication device (10).

4. Method according to claim 2 or 3, wherein authenticating is performed while the mobile communication device (10) is in the proximity of the vehicle (1).

5. Method according to claim 2 to 4, wherein authenticating is performed through a different communication channel than providing features of the mobile communication device (10).

6. Method according to any one of the preceding claims, wherein providing features of the mobile communication device (10) comprises providing a phone call feature.

7. Method according to any one of the preceding claims, wherein providing features of the mobile communication device (10) comprises providing a contact information feature.

8. Method according to any one of the preceding claims, wherein providing features of the mobile communication device (10) comprises receiving an input at the communication unit in the vehicle and performing the input at the mobile communication device (10).

9. Device (100) for providing mobile communication in a vehicle (1), wherein the device is adapted to carry out a method according to any one of the preceding claims.

10. Vehicle (1), comprising a device (100) according to claim 9.
